(19) Europäisches Patentamt / European Patent Office / Office européen des brevets

(11) **EP 3 408 514 B1**

(12) **FASCICULE DE BREVET EUROPEEN**

(45) Date de publication et mention de la délivrance du brevet:
**16.10.2019 Bulletin 2019/42**

(21) Numéro de dépôt: **17706288.2**

(22) Date de dépôt: **25.01.2017**

(51) Int Cl.:
*F02C 7/14* (2006.01)     *F02C 7/18* (2006.01)
*F02K 1/82* (2006.01)     *F01D 25/12* (2006.01)
*F02K 3/06* (2006.01)

(86) Numéro de dépôt international:
**PCT/FR2017/050152**

(87) Numéro de publication internationale:
**WO 2017/129894 (03.08.2017 Gazette 2017/31)**

(54) **ECHANGEUR THERMIQUE SURFACIQUE ET TRAITEMENT ACOUSTIQUE**

OBERFLÄCHENWÄRMETAUSCHER UND SCHALLBEHANDLUNG

SURFACE HEAT EXCHANGER AND ACOUSTIC TREATMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2016 FR 1650753**

(43) Date de publication de la demande:
**05.12.2018 Bulletin 2018/49**

(73) Titulaire: **Safran Aircraft Engines
75015 Paris (FR)**

(72) Inventeurs:
• **REGNARD, Josselin David Florian
77550 Moissy-Cramayel (FR)**
• **BAUDOIN, Laurent Louis Robert
77550 Moissy-Cramayel (FR)**
• **ORSI, Hélène Monique
77550 Moissy-Cramayel (FR)**

(74) Mandataire: **Regimbeau
20, rue de Chazelles
75847 Paris Cedex 17 (FR)**

(56) Documents cités:
**WO-A1-2015/156815     FR-A1- 2 965 251
US-A1- 2009 317 238     US-A1- 2012 114 468
US-A1- 2014 027 102**

**Description**

DOMAINE TECHNIQUE GENERAL

L'invention concerne l'architecture des échangeurs de chaleur situés sur un carter fan externe d'une turbomachine destinée à équiper un aéronef.

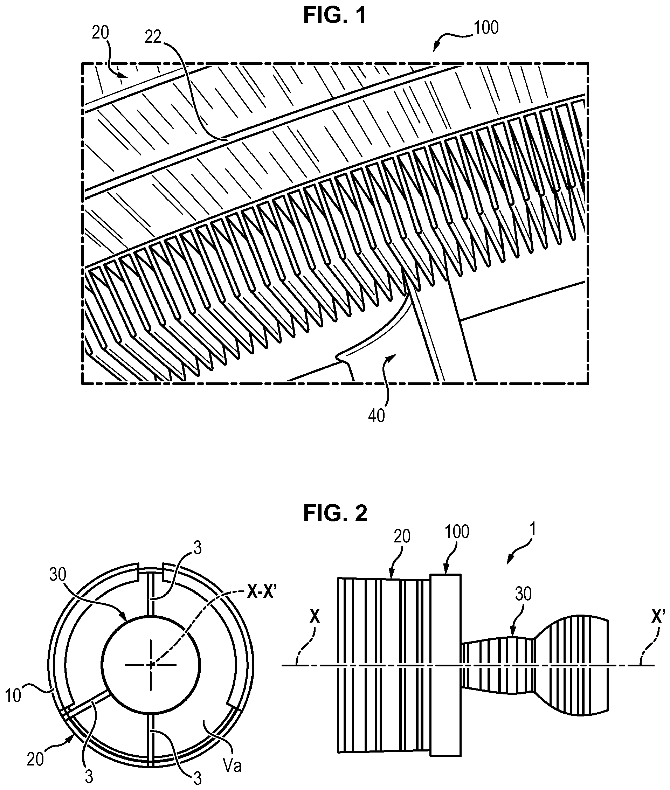

Plus précisément, l'invention concerne le traitement acoustique des échangeurs surfaciques air/huile de type SACOC (« *surface air cooler oil cooled* », voir **figure 1**), disposés typiquement entre une soufflante et des aubes de redressement 40 (« OGV, *outlet guides vanes* »), qui permettent de redresser le flux en sortie de soufflante.

Ces échangeurs comprennent une pluralité d'ailettes disposées dans le flux secondaire d'une turbomachine qui est ainsi utilisé pour refroidir la turbomachine.

ETAT DE L'ART

Le développement des turbomachines, comme la réduction de la longueur des nacelles, laisse de moins en moins de place pour le positionnement des traitements acoustiques, alors que les contraintes de réduction du bruit ne cessent d'augmenter.

Par conséquent, les solutions consistant à disposer des éléments d'absorption acoustique en aval de l'échangeur ne sont plus nécessairement privilégiés.

D'autres solutions ont cherché à concilier dissipation thermique et réduction de bruit en modifiant les échangeurs afin d'optimiser le volume occupé.

A ce titre, les documents US 2011/0303398 et US 2011/0126544 présentent une couche acoustique juxtaposée à l'échangeur, la couche étant typiquement en forme de nid d'abeille avec des tuyaux sortants utilisant l'effet de résonance de Helmholz.

Le document US 2010/0155016 quant à lui utilise des matériaux spécifiques au niveau de l'échangeur pour réduire la diffusion sonore.

Le document US 2014/027102 propose un matériau un support pour ailettes qui est en mousse métallique (*metal foam material*).

Enfin, le document US 2009/317238 propose d'utiliser les ailettes de l'échangeur pour diminuer le bruit émis par la turbomachine, soit en utilisant des matériaux particuliers, pour leur porosité par exemple, soit en utilisant leur propriété d'interférence, en générant des sources secondaires qui interfèrent, de façon destructive avec une source primaire (la détermination de distance entre deux sources est alors important).

Ces solutions ne présentent pas toujours les résultats obtenus. Il est par conséquent souhaitable de mettre un avant une nouvelle architecture permettant d'assurer à la fois les fonctions de refroidissement et d'absorption acoustique.

PRESENTATION DE L'INVENTION

A cette fin, l'invention concerne un ensemble pour turbomachine, l'ensemble comprenant :

- un carter s'étendant selon un axe longitudinal de la turbomachine,
- un échangeur thermique surfacique disposé sur une périphérie interne dudit carter et comprenant une pluralité d'ailettes de refroidissement s'étendant radialement vers l'intérieur et longitudinalement, et
- un corps central disposé concentriquement en partie à l'intérieur dudit carter,

ledit carter et le corps central définissant entre eux une voie d'air annulaire dont la largeur au niveau de l'échangeur thermique est sensiblement constante,

l'ensemble étant caractérisé en ce que la répartition des ailettes est distribuée sur plus de 180° de la périphérie interne du carter et en ce que la hauteur moyenne des ailettes est supérieure à 5% de la largeur de la voie d'air annulaire au niveau de l'échangeur thermique. De plus, la hauteur des ailettes est variable. Plus particulièrement, celle-ci est définie en fonction de la position angulaire de l'ailette sur la périphérie interne du carter.

L'invention peut comprendre les caractéristiques suivantes, prises seules ou en combinaison :

- la répartition des ailettes sur la périphérie interne du carter est distribuée de façon discontinue,
- la hauteur des ailettes dépend de leur position angulaire et vérifie une fonction sinusoïdale,
- l'équation est la suivante : $h(\theta) = h_0|\cos(n.\theta)|$, avec n un entier naturel et $h_0$ tel que $h_0 \geq \pi/2 \times 0.05 \times h_{Va}$, $h_{va}$ étant la largeur de la voie d'air $V_a$,
- la répartition des ailettes est distribuée sur plus de 270° de la périphérie interne du carter,
- l'espacement entre deux ailettes est inférieur à 8,5 mm, de sorte que l'échangeur se comporte acoustiquement comme une chambre d'expansion pour des fréquences allant jusqu'à 10kHz, à température ambiante de 20°C,
- l'espacement entre deux ailettes est inférieur à 4,3 mm, de sorte que l'échangeur se comporte acoustiquement comme une chambre d'expansion pour des fréquences allant jusqu'à 20kHz, à température ambiante de 20°C,
- l'espacement entre deux ailettes est déterminé à iso-surface en fonction de la surface d'une ailette et de la surface totale des ailettes souhaitée.

Enfin, l'invention concerne une turbomachine comprenant un ensemble tel que décrit précédemment.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 représente une vue des ailettes d'un échangeur de type SACOC tel que connu de l'art antérieur,
- La figure 2 représente le positionnement d'un échangeur dans une turbomachine,
- La figure 3 représente une turbomachine,
- Les figures 4 et 5 représentent un échangeur et ses caractéristiques géométriques selon un mode de réalisation de l'invention,
- Les figures 6 à 13 représentent différents modes de réalisation de l'invention,
- La figure 14 représente deux schémas de chambre d'expansion,
- La figure 15 représente les pertes par transmission dans une chambre de transmission,
- La figure 16 représente la chambre d'expansion créée par les ailettes de l'échangeur,
- La figure 17 représente une infinité d'ailettes, créant ainsi une chambre d'expansion parfaite,
- La figure 18 représente un nombre fini d'ailettes,
- La figure 19 représente une modélisation de la propagation acoustique,
- La figure 20 représente un diagramme d'atténuation des modes,
- La figure 21 représente une courbe illustrant l'influence de différents paramètres,
- Les figures 22a, 22b et 23a, 23b représentent deux exemples de diagrammes d'atténuation des modes en fonction de deux densités de répartition d'ailettes.

DESCRIPTION DETAILLEE

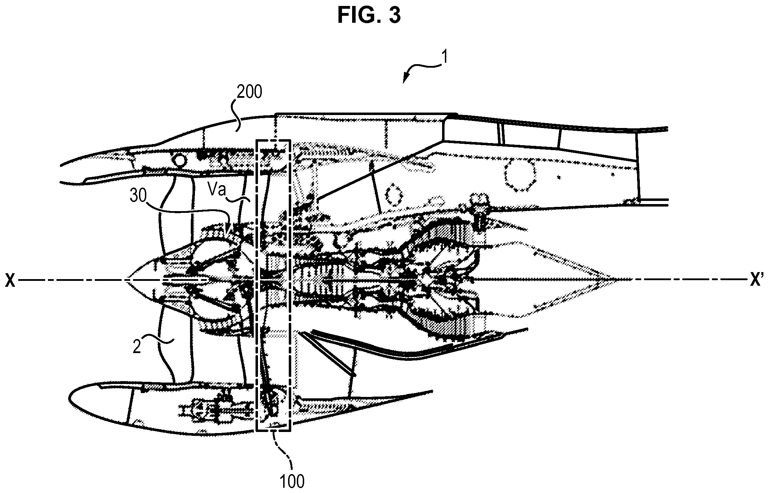

Les **figures 2 et 3** montrent le positionnement d'un échangeur surfacique 100 dans une turbomachine 1. La turbomachine 1 reçoit en entrée par une soufflante 2 de l'air divisé en deux flux, un flux primaire et un flux secondaire. Le flux primaire est compressé puis enflammé à l'aide de carburant. Les gaz générés entrainent une turbine qui met en rotation la soufflante, ou (fan). Celle-ci entraine le flux secondaire qui crée la poussée.

La turbomachine 1 est logée dans une nacelle 200 comprenant un carter 20 s'étendant selon un axe longitudinal X-X' de la turbomachine 100. La turbomachine comprend, au moins partiellement en aval de la soufflante, en suivant la direction du flux d'air traversant la turbomachine, un corps central 30. Le corps central 30 se trouve partiellement à l'intérieur de ce carter 20. Le corps central 30 est disposé de manière concentrique ou sensiblement concentrique par rapport à l'axe longitudinal X-X'. Le corps central 30 regroupe notamment les différents éléments que traverse le flux primaire.

Le carter 20 et le corps central 30 définissent entre eux une voie d'air annulaire Va, sous forme d'un canal annulaire, permettant au flux secondaire de s'écouler. Dans un plan orthogonal à l'axe longitudinal X-X, la voie d'air annulaire Va a une forme de couronne régulière.

Un échangeur thermique surfacique 100 est disposé sur une périphérie interne 22 du carter 20. L'échangeur 100 comprend une pluralité d'ailettes de refroidissement 110 qui s'étendent à la fois radialement vers l'intérieur du carter 20, en direction du corps central 30, et à la fois longitudinalement selon l'axe X-X'.

L'échangeur thermique est dit surfacique car l'échange se fait grâce à la surface de l'ailette 110, entre le fluide qui circule dans les ailettes 110 et l'air du flux secondaire qui passe dans la voie d'air annulaire Va. Typiquement, un tel échangeur thermique 100 fonctionne sur un principe d'échange huile-air, communément appelé SACOC. Les propriétés thermiques du SACOC dépendent ainsi principalement de la surface totale des ailettes 110 qui composent l'échangeur 100.

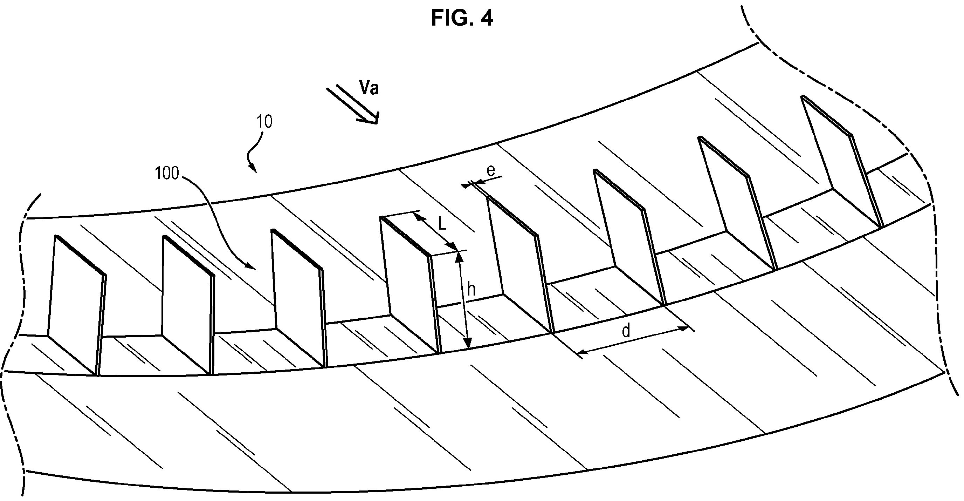

Selon les modes de réalisation, les ailettes 110 ont une forme de parallélépipèdes rectangles, à laquelle on peut définir une épaisseur e, une longueur L et une hauteur h. La hauteur h et la longueur L étant largement supérieures à l'épaisseur e, la surface de contact est essentiellement surfacique, d'où le terme d'échangeur surfacique (voir **figure 4).**

Classiquement, l'épaisseur e est de 1 à 2 mm et la longueur L de 100 m. Thermiquement et aérodynamiquement, il est préférable d'avoir une épaisseur e faible pour favoriser l'échange thermique et obstruer le moins possible le flux secondaire. La longueur L est quant à elle un critère purement aérothermique et intervient peu acoustiquement (sensibilité faible en matière d'acoustique).

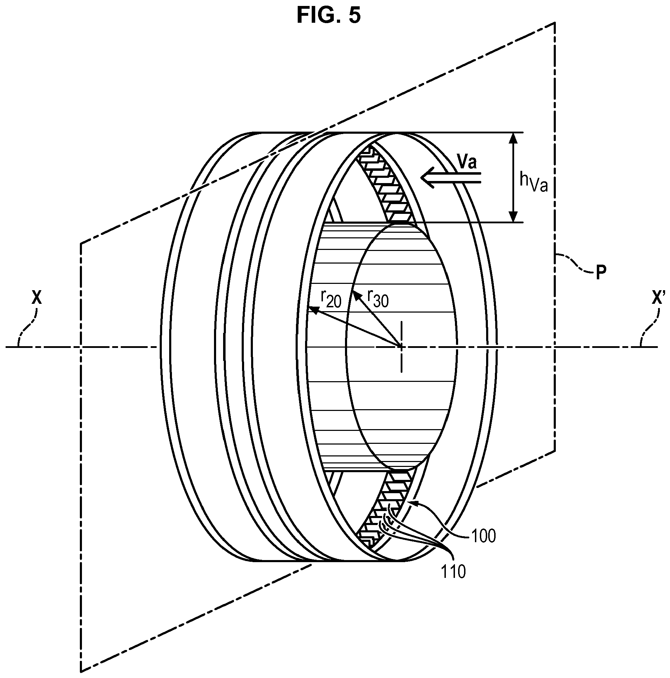

Au niveau de l'échangeur thermique 100, c'est-à-dire au niveau d'un plan orthogonal P à l'axe longitudinal X-X' qui coupe ledit échangeur 100, la largeur, ou section, de la voie d'air Va est constante ou sensiblement constante (voir **figure 5).**

En d'autres termes, la section selon un tel plan du carter 20 et du corps central 30 forme deux cercles concentriques, de rayons respectifs $r_{20}$ et $r_{30}$. La largeur de la voie d'air Va, qui correspond à l'épaisseur de la couronne ou encore à la distance radiale entre le carter 20 et le corps central 30, c'est-à-dire la différence entre les deux rayons $r_{20}$ et $r_{30}$, est donc constante (voir **figure 5**).

On note $h_{Va}$ la largeur précédemment définie.

Dans un mode de réalisation particulier, il se peut que les sections dans le plan P ne forment pas des cercles, ou tout au moins pas des cercles concentriques. La largeur $h_{Va}$ désigne alors la distance radiale moyenne entre le carter 20 et le corps central 30.

On définit les termes d'amont et d'aval par le sens d'écoulement de l'air dans la voie d'air lorsque la turbomachine 1 est en fonctionnement.

Pour des raisons de clarté de la description, les phénomènes et principes physiques concourant à la faisabilité et au fonctionnement de l'invention sont explicités en **annexes** à la fin de la présente description.

Afin d'améliorer les propriétés acoustiques de la turbomachine 1, la répartition des ailettes 110 est distribué sur plus de 180° de la périphérie interne 22 du carter 20 et la hauteur moyenne $h_{MOY}$ des ailettes 110 est supérieure à 5% de la largeur de la voie d'air annulaire au niveau de l'échangeur thermique $h_{VA}$, $h_{MOY} \geq 0,05 \; h_{VA}$), c'est à dire dans le plan P.

Le terme de hauteur moyenne signifie que l'on effectue la moyenne des hauteurs h des ailettes. Lorsqu'une zone est sans ailettes 110, on n'attribue pas de hauteur nulle. Cela signifie que la hauteur moyenne $h_{MOY}$ n'est calculée pour que des zones comprenant des ailettes 110. Cette valeur de 5% de la voie d'air Va permet de profiter des principes physiques d'acoustique détaillés en **annexes** tout en maintenant la surface d'échange utile à la dissipation thermique. La valeur de 180° est liée elle aussi à l'obtention d'un bénéfice minimum en matière de réduction de bruit.

Plusieurs modes de réalisation vont à présent être décrits. En effet, il existe plusieurs leviers d'ajustement : la hauteur h des ailettes 110, la répartition des ailettes 110 sur la périphérie interne 22 du carter 20 et la distance d entre ailettes 110. Ce dernier paramètre peut néanmoins être déterminé par calcul à performance thermique égale (« iso-surface ») par rapport à un échangeur 100 classiquement mis en place dans une turbomachine 1 ou par rapport à un cahier des charges préalablement établis. Dans ce cas, il est ajusté *a posteriori* pour permettre d'obtenir la surface d'échange thermique nécessaire, tout en restant en nombre suffisant pour vérifier les effets physiques présentés en **annexes.**

La hauteur h des ailettes 110 peut vérifier la condition introduite précédemment de plusieurs façons.

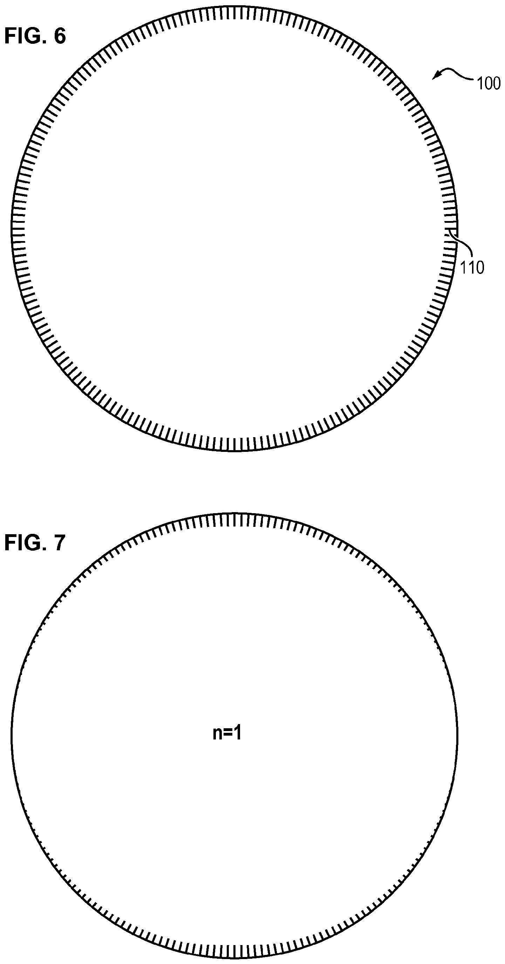

En lien avec la **figure 6,** le premier mode de réalisation, non revendiqué, consiste à avoir une hauteur h d'ailettes 10 constante : on a ainsi $h = h_{MOY} \geq 0,05 \; h_{Va}$ [1000].

A titre d'exemple, pour une voie d'aie Va de largeur $h_{Va}$ de 40 cm, la hauteur h doit être supérieure à 20mm.

Alternativement, la hauteur h des ailettes 110 est variable. Plus particulièrement, celle-ci est définie en fonction de la position angulaire de l'ailette 110 sur la périphérie interne 22 du carter 20.

On définit alors la hauteur h comme une fonction de type $h = h(\theta)$.

On peut citer la fonction paramétrique dite « marguerite » :

$$h_n(\theta) = h_0 \left| \cos(n\theta) \right|$$

avec n un entier naturel et $h_0$ tel que $h_0 \geq \pi/2 \times 0,05 \; h_{Va}$, c'est-à-dire $h_0 \geq 0,08 h_{Va}$, de sorte que $h_{MOY}$ vérifie toujours l'inégalité [1000] introduite précédemment.

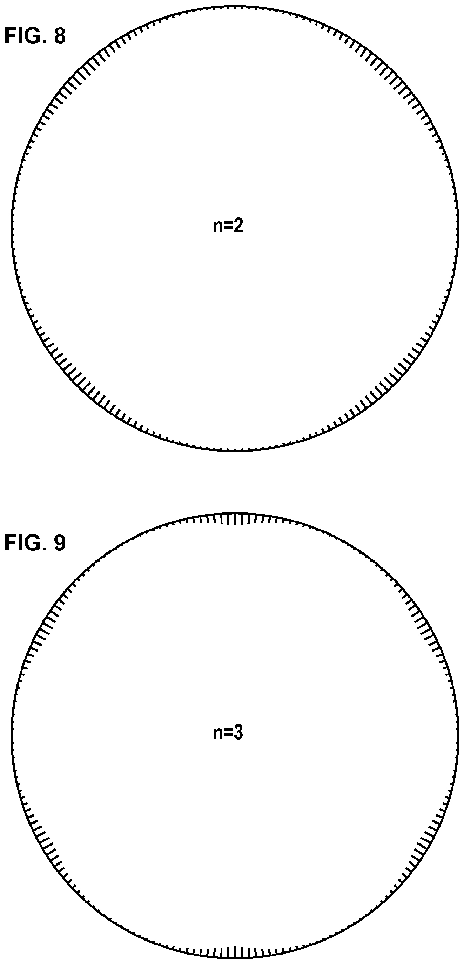

Les **figures 7, 8, 9 et 10** représentent la hauteur paramétrique précédente avec respectivement n = 1 ; n = 2 ; n = 3 ; n = 10. Le paramètre n est ajusté en fonction des formes modales qui se propagent dans la voie d'air Va.

On peut aussi citer d'autres fonctions sinusoïdales, de type :

$$h_n(\theta) = h_0 \left( 1 + \cos(n\theta) \right)$$

avec $h_0 \geq 0,05 \; h_{Va}$,
ou encore

$$h_n(\theta) = h_0 \cos^2(n\theta)$$

avec $h_0 \geq 0{,}10 \, h_{Va}$.

Plus généralement, une fonction de type sinusoïdale peut être appliquée, tout en s'assurant que la hauteur moyenne $h_{MOY}$ des ailettes 110 vérifie la condition [1000].

La répartition des ailettes 110 quant à elle peut aussi varier selon les modes de réalisation.

Si la répartition à 360° semble la plus naturelle, elle n'est pas toujours implémentable car l'intégralité de la périphérie 22 du carter 20 n'est pas forcément disponible pour mettre des ailettes 110 de l'échangeur 100, notamment en raison du passage de câbles, bras structuraux de fixation ou de passage de servitudes, pylône, etc. : ces éléments représentés par la référence 3 en **figure 2.**

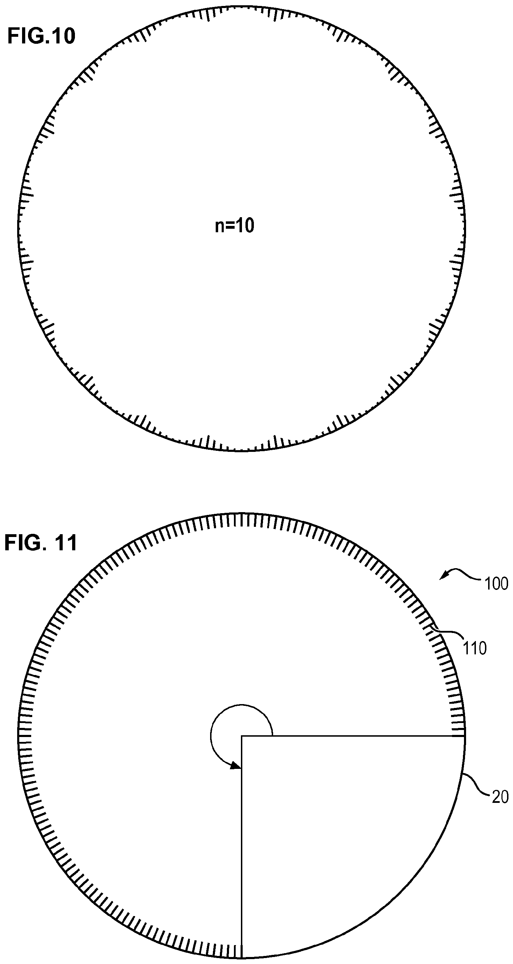

Dans un mode de réalisation, la répartition est supérieure à 270°. Voir notamment la **figure 11** sur laquelle la répartition est égale à 270°.

Dans un mode de réalisation, la répartition est continue, c'est-à-dire que l'ensemble des ailettes forme un unique angle supérieur à 180° (voir **figure 11** aussi).

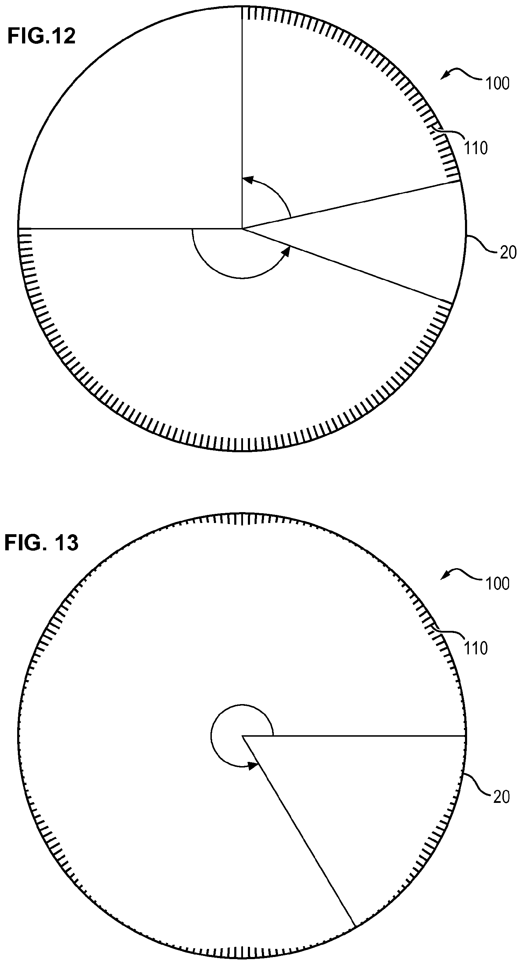

Alternativement, la répartition de la distribution peut être discontinue, c'est-à-dire avec des ruptures dans la distribution sur la périphérie interne 22, comme représenté en **figures 12 et 13**. En sommant les angles recouverts par des ailettes 110, on doit néanmoins vérifier la condition des 180°, qui est donc une condition d'angles cumulés.

Les critères de hauteur h et de répartition sont cumulables et toutes les combinaisons vérifiant les deux critères, $h_{MOY} \geq 0{,}05 \, h_{Va}$ et plus de 180° de répartition, sont envisageables.

La **figure 13** illustre ainsi une répartition supérieure à 270° continue, avec une hauteur paramétrique en fonction sinusoïdale.

Les différents modes de réalisation permettent ainsi le passage des bras de servitudes (câbles, servitudes), ou structuraux (bras de carter, pylônes sur le carter 20), qui sont représentés par la référence 3 sur la **figure 2.**

Par exemple, il est possible que ces éléments 3 traversent longitudinalement l'échangeur 100 en passant là où la hauteur des ailettes 110 est nulle, grâce à la fonction sinusoïdale, ou bien là où une discontinuité est présente.

En relation avec les **annexes** présentes en fin de description, les valeurs de 5% de la largeur $h_{Va}$ de la voie d'air Va sont choisies de sorte à ce que les effets d'acoustique soient sensibles. Il en est de même pour les 180° de la répartition des ailettes 110 ; en deçà, on estime que les effets recherchés ne sont pas suffisants.

Enfin, il est possible de modifier la distance d entre les ailettes 110. Typiquement, ce paramètre peut être ajusté une fois connue la hauteur h et la répartition des ailettes 100 pour obtenir la surface nécessaire à l'échange thermique. En d'autres termes, il est déterminé en fonction de la surface d'une ailette 110 et de la surface totale des ailettes 110 souhaité.

On dit ainsi que la distance d est déterminée par iso-surface par rapport aux contraintes de dissipation thermique, généralement fournies par un cahier des charges.

Une conséquence liée à la nouvelle hauteur h des ailettes 110, qui est plus importante que sur un échangeur standard, réside dans la possibilité d'espacer un peu plus les ailettes 110, à surface d'échange thermique totale équivalente.

Une autre possibilité consiste à choisir la distance d inter-ailettes pour assurer un bon effet de réflexion acoustique tel qu'exposé dans les **annexes.**

Pour que l'échangeur 100 agisse comme une chambre d'expansion tel qu'exposé dans les **annexes,** il faut que la longueur d'onde λ du son soit quatre fois supérieure à la distance d inter-ailettes 110.

Par exemple, pour profiter de l'effet de réflexion jusqu'à 10kHz, respectivement 20kHz, dans des conditions de températures normales de l'ordre de 20°C, la distance d inter-ailettes doit être inférieure à 8,5mm, respectivement 4,3mm.

Ce critère de distance d en fonction de la longueur d'onde accordée à la fréquence du bruit que l'on souhaite atténuer peut toutefois être redondant avec la distance d calculée par iso-surface. Quoiqu'il en soit, il s'agit de déterminer une distance d qui satisfasse à la fois le dimensionnement pour les effets thermiques et pour les effets acoustiques.

Enfin, la forme des ailettes 110, que nous avons présentées comme parallélépipédiques rectangle, peut être optimisée pour en améliorer l'aérodynamique (critères de « *best aero* »). La hauteur h mentionnée dans la présente description sera soit la hauteur moyenne de chaque ailette, soit la hauteur maximale.

Ainsi, l'invention propose une solution pour traiter acoustiquement une turbomachine en ayant recours à la géométrie des ailettes de l'échangeur.

Comme on s'assure que la surface totale des ailettes 110 reste égale à celle d'un échangeur classique ou tout au moins suffisante pour permettre l'échange thermique, l'échangeur combine avantageusement ses fonctions de diffuseur thermique et de traitement acoustique, d'où un gain de place dans la turbomachine.

De plus, comme elle repose uniquement sur des considérations géométriques, l'invention n'est pas liée à un type de matériau précis.

**Annexe 1:** réflexion acoustique sur l'échangeur 100

Le premier principe physique permettant le fonctionnement de l'invention réside dans l'optimisation du coefficient de réflexion en conduit *via* la modification de la section apparente.

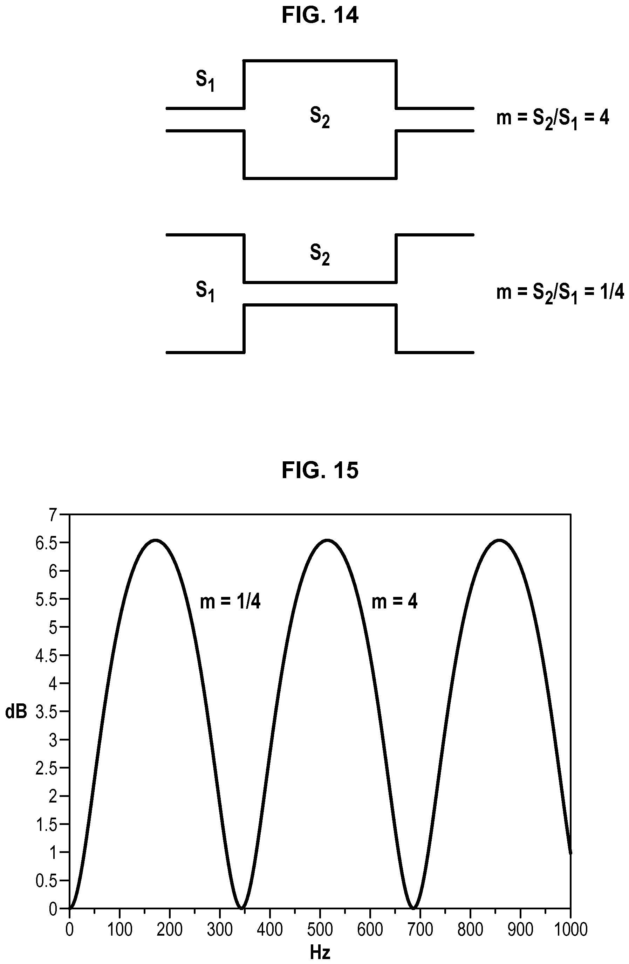

La **figure 14** présente deux schémas d'illustration.

Pour une propagation du mode plan, c'est-à-dire en dessous de la fréquence de coupure, la perte par transmission (« TL pour *transmission loss* ») s'exprime en fonction du nombre d'onde k ($k = 2\pi f/c$, où c est la célérité du son dans le milieu), de la longueur L du changement de section et du rapport de section m : $m = S_2/S_1$.

La perte par transmission s'écrit sous la forme :

$$TL = 10 log_{10}\left[1 + \frac{1}{4}\left(m - \frac{1}{m}\right)^2 \sin^2(kL)\right] \quad [1001]$$

Par symétrie de l'expression [1001] entre m et 1/m, on remarque qu'il importe peu que la section apparente rétrécisse ou s'élargisse : la courbe de perte par transmission présentée en **figure 15** est la même.

Dans le cas présent de l'échangeur 100, le taux d'expansion m est inférieur à 1, c'est à dire qu'on est sur un rétrécissement de la section.

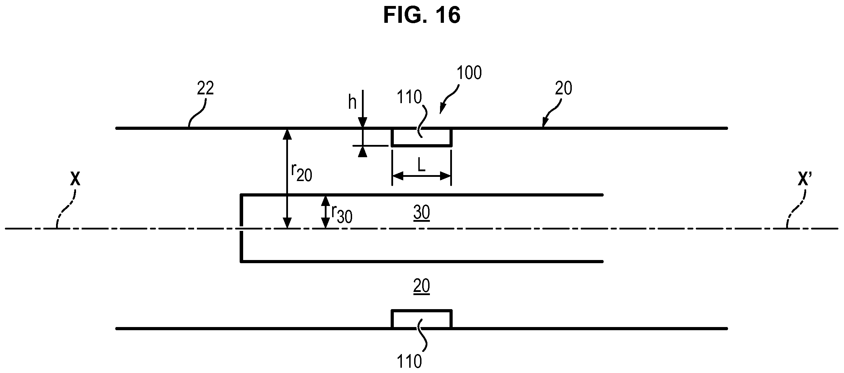

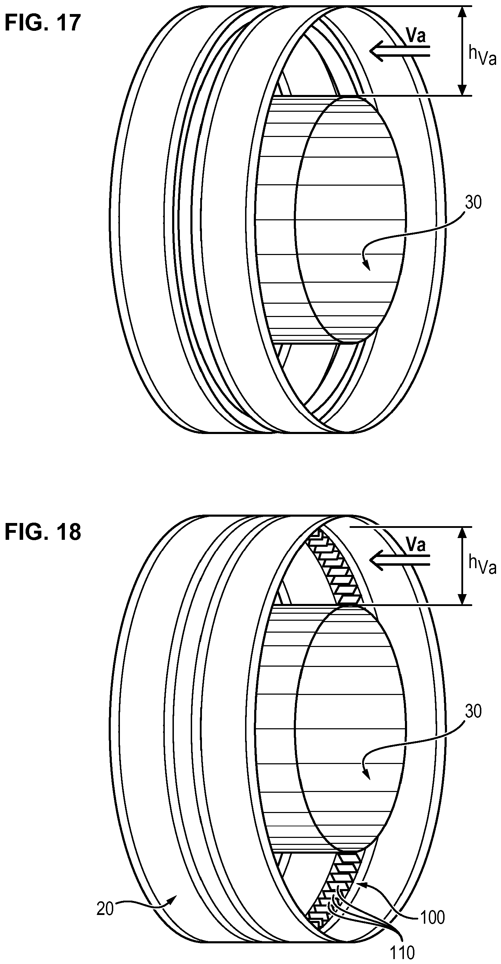

D'un point de vue acoustique, si la longueur d'onde du son est suffisamment grande par rapport à la distance inter-ailette d de l'échangeur 100, la présence des ailettes 110 modifie la section apparente, tel que représenté sur la voir **figure 16,** et l'échangeur 100 se comporte comme une chambre d'expansion : la géométrie de la **figure 17,** comportant une infinité d'ailettes, et celle de la **figure 18,** comportant un nombre fini mais suffisant d'ailettes, présentent des résultats similaire en matière d'acoustique

Néanmoins, la propagation étant multimodale, c'est-à-dire ayant lieu aussi au-dessus de la première fréquence de coupure de la voie d'air Va, la propagation ne se fait pas uniquement dans un mode plan, mais dans des modes radiaux r et azimutaux a. Pour ces modes, la courbe présentée en **figure 15** ne s'applique plus.

On distingue dans la veine secondaire (donc ici la voie d'air Va) deux types de bruit dans une turbomachine 1 bi-flux :

- Le bruit de raies, lié à une périodicité, produit par les interactions des aubes de turbines, des aubes de guidage de sortie 40 (« OGV, *outlet guides vanes* »), ou encore du distributeur à aube fixe (« IGV, *inlet guides vanes* »),
- Le bruit large bande (BLB), d'origine aléatoire, résultant du bruit des turbulences sur les bords d'attaque, les bords de fuite de la soufflante 2 (ou « *fan* »)...

Dans le cas du bruit large bande, l'amplitude maximale de l'énergie acoustique est déployée en modes azimutaux d'ordres élevés sur la périphérie externe 22 du carter 20 : tout élément réfléchissant ou réfractant dans cette zone aura une influence optimale sur la propagation du son. C'est pour cela que l'échangeur 100 présente un intérêt majeur pour la réduction du bruit large bande.

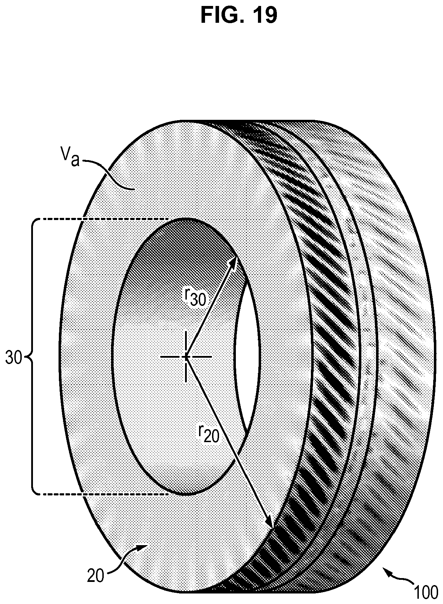

Par calcul numérique représenté en **figure 19** qui montre une modélisation de la propagation acoustique d'un mode azimutal d'ordre élevé, par exemple pour r=1 et a=40, dans la voie d'air Va, on observe une réflexion de l'énergie acoustique en aval de l'échangeur 100, ce qui réduit le rayonnement externe. Sur la figure 19, plus la couleur est claire, plus l'amplitude sonore est faible.

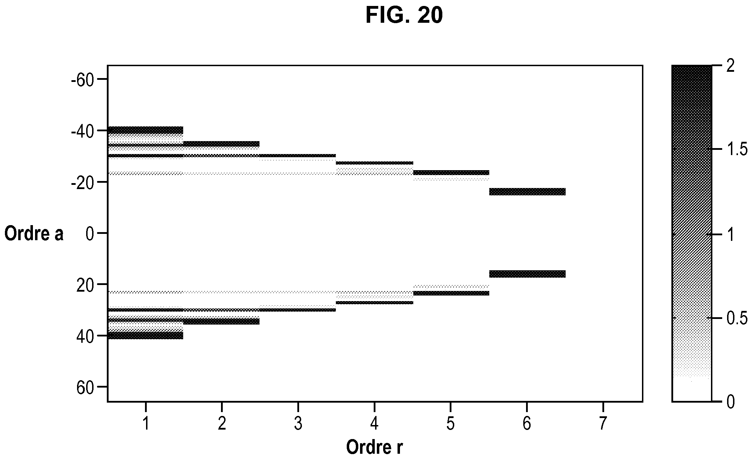

Comme représente en **figure 20,** en simulant le calcul sur davantage de modes radiaux, représenté par r en abscisse, et azimutaux, représenté par l'ordre a en ordonnée, on confirme l'atténuation forte des modes azimutaux d'ordre a élevées, en positif et en négatif. La couleur représente les pertes par transmission PL (plus la couleur est foncée, plus l'atténuation est forte).

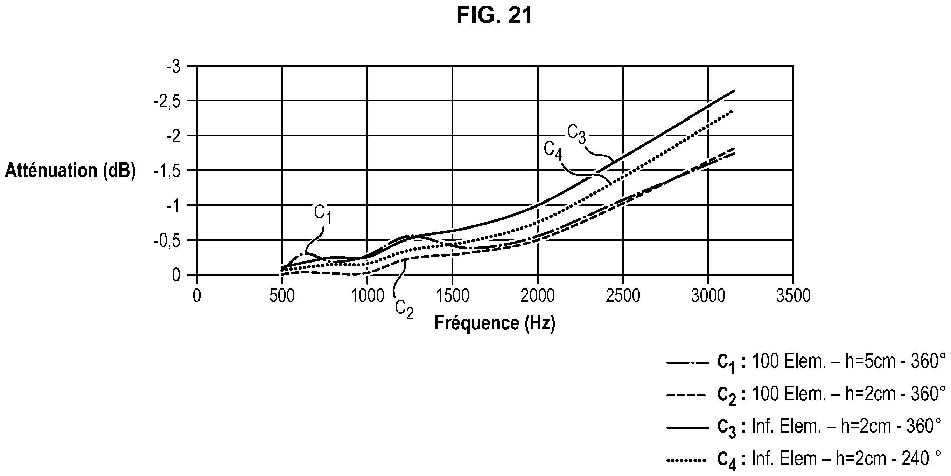

La **figure 21** présente un ensemble de courbes illustrant les effets de la hauteur h des ailettes, du nombre d'ailettes ainsi que la répartition de la distribution sur la périphérie du carter :

- La courbe $C_1$ concerne cent ailettes de hauteur h=5cm réparties à 360°,
- La courbe $C_2$ concerne cent ailettes de hauteur h=2cm réparties à 360°C,
- La courbe $C_3$ concerne une infinité d'ailettes, ce équivaut à une chambre d'expansion parfaite, telle que représentée en **figure 17,** de hauteur h=2cm réparties à 360°,
- La courbe $C_4$ concerne une infinité d'ailettes de hauteur 2 cm répartie à 240°.

On remarque que le nombre d'ailettes et le positionnement conditionnent la perte par transmission *TL* de l'expression [1001] en hautes fréquences, notamment plus de 1kHz, alors que la hauteur h des ailettes pilote davantage l'atténuation en basse fréquence.

**Annexe 2:** redistribution modale par l'échangeur 100

Le second phénomène physique contribuant au fonctionnement de l'invention est un effet de redistribution modale en présence d'un système rotor-stator. On se réfère à *Tyler* & *Sofrin* dont le modèle permet d'estimer les modes qui en théorie ne peuvent pas se propager - on parle de coupure modale. Pour un système rotor-stator, ces coupures sont pilotées par le nombre d'aubes de la soufflante et le nombre de stators.

Cette redistribution modale dépend pour beaucoup du nombre d'ailettes 110 de l'échangeur 100 sur la périphérie interne 22 du carter 20. On peut déterminer ce nombre de façon à déployer l'énergie acoustique vers des modes qui ne sont pas propagés dans la voie d'air Va.

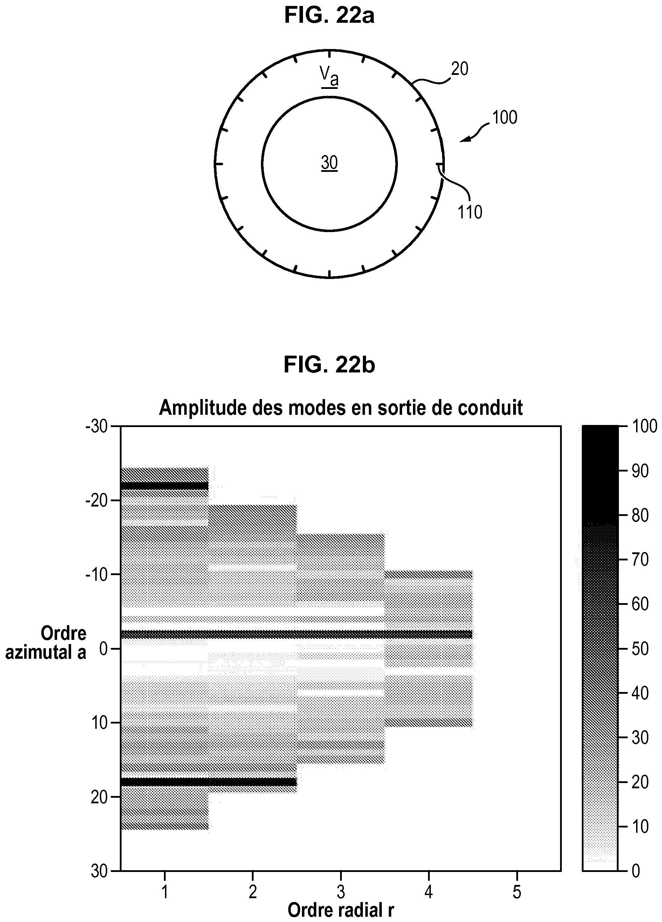

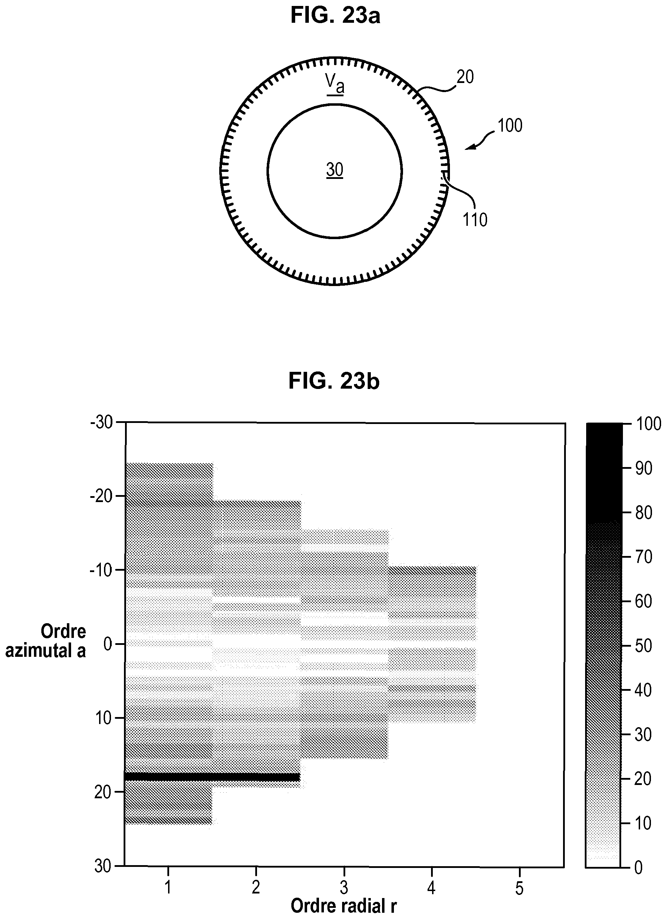

Les **figures 22a, 22b et 23a, 23b** représentent des diagrammes d'amplitude des modes en sortie de la voie d'air Va pour un ordre radial r=1 et azimutal a=18, pour une hauteur h des ailettes 110 de 5mm et une répartition de la distribution à 360°. Prenons comme exemple, une soufflante composée de 18 aubes : à la raie fondamentale 1F, la distribution spatiale de l'énergie acoustique impose que le mode 18 propage majoritairement l'énergie acoustique. Dans ce cas, en traversant le SACOC, une partie de l'énergie acoustique sera déployée sur d'autres modes :

-   En **figure 22a et 22b,** avec vingt ailettes 110, l'énergie acoustique se déploie sur les modes propagatifs a= 18, a=-2 et a=-22,
-   En **figure 23a et 23b,** avec cent ailettes 110, l'énergie acoustique se déploie sur le mode a=18 et a=82. Ce dernier est évanescent, donc non propagatif à la fréquence cible de 1200 Hz, il n'apparait donc pas sur la figure 23b.

Le nombre d'ailettes pilote le contenu modal se propageant dans la voie d'air Va.

Cette réorganisation répond à la formulation de Tyler & Sofrin liant l'ordre azimutal des modes acoustiques a avec les éléments géométriques du stator, sur la **figure 23,** l'échangeur 100).

A l'harmonique k de la fréquence de passage des pales, les ordres azimutaux générés prennent la forme a = kB - sV, où B est le nombre d'aubes de la soufflante, B le nombre d'éléments statoriques et s un nombre relatif quelconque.

## Revendications

1.   Ensemble pour turbomachine (1), l'ensemble comprenant :

     - un carter (20) s'étendant selon un axe longitudinal (X-X') de la turbomachine (1),
     - un échangeur thermique surfacique (100) disposé sur une périphérie interne (22) dudit carter (20) et comprenant une pluralité d'ailettes de refroidissement (110) s'étendant radialement vers l'intérieur et longitudinalement, et
     - un corps central (30) disposé concentriquement en partie à l'intérieur dudit carter (20),

     ledit carter (20) et le corps central (30) définissant entre eux une voie d'air annulaire (Va) dont la largeur ($h_{Va}$) au niveau de l'échangeur thermique (100) est sensiblement constante,
     l'ensemble étant **caractérisé en ce que** la répartition des ailettes (110) est distribuée sur plus de 180° de la périphérie interne (22) du carter (20), **en ce que** la hauteur moyenne ($h_{MOY}$) des ailettes (110) est supérieure à 5% de la largeur ($h_{Va}$) de la voie d'air annulaire (Va) au niveau de l'échangeur thermique (100) et **en ce que** la hauteur (h) entre ailettes (110) est variable en fonction de la position angulaire de l'ailette (110) sur la périphérie interne (2) du carter (20).

2.   Ensemble selon la revendication 1, dans lequel la répartition des ailettes (110) sur la périphérie interne (22) du carter (20) est distribuée de façon discontinue.

3.   Ensemble selon la revendication 1 ou 2, dans lequel la hauteur (h) des ailettes (100) dépend de leur position angulaire et vérifie une fonction sinusoïdale.

4.   Ensemble selon la revendication 3, dans lequel l'équation est la suivante : $h(\theta) = h_0|\cos(n.\theta)|$, avec n un entier naturel et $h_0$ tel que $h_0 \geq \pi/2 \times 0{,}05 \times h_{Va}$ , $h_{va}$ étant la largeur de la voie d'air $V_a$.

5.   Ensemble selon l'une quelconque des revendications 1 à 4, dans lequel la répartition des ailettes (110) est distribuée sur plus de 270° de la périphérie interne (22) du carter (20).

6.   Ensemble selon l'une quelconque des revendications 1 à 5, dans lequel l'espacement entre deux ailettes (110) est inférieur à 8,5 mm, de sorte que l'échangeur (100) se comporte acoustiquement comme une chambre d'expansion pour des fréquences allant jusqu'à 10kHz, à température ambiante de 20°C.

7. Ensemble selon l'une quelconque des revendications 1 à 5, dans lequel l'espacement entre deux ailettes (110) est inférieur à 4,3 mm, de sorte que l'échangeur (100) se comporte acoustiquement comme une chambre d'expansion pour des fréquences allant jusqu'à 20kHz, à température ambiante de 20°C.

8. Ensemble selon l'une quelconque des revendications 1 à 5, dans lequel l'espacement entre deux ailettes (110) est déterminé à iso-surface en fonction de la surface d'une ailette (110) et de la surface totale des ailettes (110) souhaitée.

9. Turbomachine (1) comprenant un ensemble selon l'une quelconque des revendications précédentes.


**Patentansprüche**

1. Gruppe für Turbomaschine (1), wobei die Gruppe umfasst:

   - ein Gehäuse (20), das sich gemäß einer Längsachse (X-X') der Turbomaschine (1) erstreckt;
   - einen Oberflächen-Wärmetauscher (100), der auf einer internen Peripherie (22) des genannten Gehäuses (20) angeordnet ist und eine Vielzahl von Kühlrippen (110) umfasst, die sich radial nach innen und in Längsrichtung erstrecken und
   - einen zentralen Körper (30), der konzentrisch im Innern des genannten Gehäuses (20) angeordnet ist,

   wobei das genannte Gehäuse (20) und der zentrale Körper (30) untereinander einen ringförmigen Luftweg (Va) definieren, dessen Breite ($h_{va}$) am Wärmetauscher (100) deutlich konstant ist,
   wobei die Gruppe **dadurch gekennzeichnet ist, dass** die Verteilung der Flügel (110) über mehr als 180° der internen Peripherie (22) des Gehäuses (20) verteilt ist, dass die durchschnittliche Höhe ($h_{MOY}$) der Flügel (110) größer ist als 5 % der Breite ($h_{va}$) des ringförmigen Luftwegs (Va) am Wärmetauscher (100) und dass die Höhe (h) zwischen den Flügeln (110) in Abhängigkeit von der ringförmigen Position des Flügels (110) auf der internen Peripherie (2) des Gehäuses (20) variabel ist.

2. Gruppe gemäß Anspruch 1, bei der die Verteilung der Flügel (110) auf der internen Peripherie (22) des Gehäuses (20) unterbrochen verteilt ist.

3. Gruppe gemäß Anspruch 1 oder 2, bei der die Höhe (h) der Flügel (100) von ihrer ringförmigen Position abhängt und eine sinusförmige Funktion überprüft.

4. Gruppe gemäß Anspruch 3, bei der die Gleichung wie folgt lautet: $h(\theta) = h0|\cos(n.\theta)|$, wobei n eine ganze natürliche Zahl ist und $h_0$ als $h_0 \geq \Pi/2 \times 0{,}05 \times h_{va}$, wobei $h_{va}$ die Breite des Luftwege $V_a$ ist.

5. Gruppe gemäß irgendeinem der Ansprüche 1 bis 4, bei der die Verteilung der Flügel (110) über mehr als 270° der internen Peripherie (22) des Gehäuses (20) verteilt ist.

6. Gruppe gemäß irgendeinem der Ansprüche 1 bis 5, bei der die Beabstandung zwischen zwei Flügeln (110) derart kleiner ist als 8,5 mm, dass der Tauscher (110) sich akustisch wie eine Dehnungskammer für Frequenzen verhält, die bei einer Umgebungstemperatur von 20° C bis zu 10 kHz reichen.

7. Gruppe gemäß irgendeinem der Ansprüche 1 bis 5, bei der die Beabstandung zwischen zwei Flügeln (110) derart geringer ist als 4,3 mm, dass der Tauscher (100) sich akustisch wie eine Dehnungskammer für Frequenzen verhält, die bei einer Umgebungstemperatur von 20° C bis zu 20 kHz reichen.

8. Gruppe gemäß irgendeinem der Ansprüche 1 bis 5, bei der die Beabstandung zwischen zwei Flügeln (110) an der Isofläche in Abhängigkeit von der Fläche eines Flügels (110) und der gewünschten Gesamtfläche der Flügel (110) bestimmt ist.

9. Turbomaschine (1), die eine Gruppe gemäß irgendeinem der voranstehenden Ansprüche umfasst.

**Claims**

1.  An assembly for a turbomachine (1), the assembly comprising:

    - a casing (20) extending along a longitudinal axis (X-X') of the turbomachine (1),
    - a surface heat exchanger (100) disposed on an inner periphery (22) of said casing (20) and comprising a plurality of cooling fins (110) extending radially inwardly and longitudinally, and
    - a central body (30) concentrically disposed partly inside said casing (20),

    said casing (20) and the central body (30) defining between them an annular air pathway (Va) the width ($h_{va}$) of which at the heat exchanger (100) is substantially constant,
    the assembly being **characterised in that** the distribution of the fins (110) is allocated on more than 180° of the inner periphery (22) of the casing (20), **in that** the average height ($h_{MOY}$) of the fins (110) is higher than 5% of the width ($h_{va}$) of the annular air pathway (Va) at the heat exchanger (100) and **in that** the height (h) between fins (110) is variable as a function of the angular position of the fin (110) on the inner periphery (2) of the casing (20).

2.  The assembly according to claim 1, wherein the distribution of the fins (110) on the inner periphery (22) of the casing (20) is allocated in a discontinuous manner.

3.  The assembly according to claim 1 or 2, wherein the height (h) of the fins (110) depends on their angular position and fulfils a sinusoidal function.

4.  The assembly according to claim 3, wherein the equation is as follows: $h(\theta) = h_0|\cos(n.\theta)|$, with n being an integer and $h_0$ such that $h_0 \geq \pi/2 \times 0.05 \times h_{va}$, $h_{va}$ being the width of the air pathway $V_a$.

5.  The assembly according to any of claims 1 to 4, wherein the distribution of the fins (110) is allocated on more than 270° of the inner periphery (22) of the casing (20).

6.  The assembly according to any of claims 1 to 5, wherein the spacing between two fins (110) is lower than 8.5mm, such that the exchanger (100) acoustically behaves as an expansion chamber for frequencies up to 10kHz, at a room temperature of 20°C.

7.  The assembly according to any of claims 1 to 5, wherein the spacing between two fins (110) is lower than 4.3mm, such that the exchanger (100) acoustically behaves as an expansion chamber for frequencies up to 20kHz, at a room temperature of 20°C.

8.  The assembly according to any of claims 1 to 5, wherein the spacing between two fins (110) is determined at an isosurface as a function of the surface of a fin (110) and the desired total surface of the fins (110).

9.  A turbomachine (1) comprising an assembly according to any of the preceding claims.

# FIG. 1

# FIG. 2

**FIG. 3**

**FIG. 4**

EP 3 408 514 B1

# FIG. 5

**FIG. 6**

100

110

**FIG. 7**

n=1

FIG. 8

n=2

FIG. 9

n=3

FIG.10

n=10

FIG. 11

100

110

20

FIG.12

100

110

20

FIG. 13

100

110

20

## FIG. 14

$m = S_2/S_1 = 4$

$m = S_2/S_1 = 1/4$

## FIG. 15

## FIG. 16

EP 3 408 514 B1

**FIG. 17**

**FIG. 18**

**FIG. 19**

**FIG. 20**

EP 3 408 514 B1

**FIG. 21**

Atténuation (dB) — Fréquence (Hz)

—·— $C_1$ : 100 Elem. – h=5cm - 360°

---- $C_2$ : 100 Elem. – h=2cm - 360°

——— $C_3$ : Inf. Elem. – h=2cm - 360°

········· $C_4$ : Inf. Elem – h=2cm - 240 °

EP 3 408 514 B1

## FIG. 22a

## FIG. 22b

### Amplitude des modes en sortie de conduit

Ordre azimutal a

Ordre radial r

## FIG. 23a

## FIG. 23b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110303398 A
- US 20110126544 A
- US 20100155016 A
- US 2014027102 A
- US 2009317238 A